# EUROPEAN PATENT SPECIFICATION

(11) **EP 3 722 901 B1**
(45) Date of publication and mention of the grant of the patent: **07.02.2024**
(21) Application number: 18886159.5
(22) Date of filing: 04.12.2018
(51) Int. Cl.: G05B 23/02, G07C 5/08, G06F 11/07

(54) **VEHICLE TROUBLE DIAGNOSIS METHOD AND VEHICLE TROUBLE DIAGNOSIS APPARATUS**
FAHRZEUGFEHLERDIAGNOSEVERFAHREN UND FAHRZEUGFEHLERDIAGNOSEVORRICHTUNG
PROCÉDÉ DE DIAGNOSTIC DE PANNE DE VÉHICULE ET APPAREIL DE DIAGNOSTIC DE PANNE DE VÉHICULE

(30) Priority: 08.12.2017 CN 201711298125
(43) Date of publication of application: 14.10.2020
(73) Proprietor: Autel Intelligent Technology Corp., Ltd., Shenzhen, Guangdong 518055 (CN)
(72) Inventor: YANG, Yuexi, Shenzhen, Guangdong 518055 (CN)
(74) Representative: Gulde & Partner
(86) International application number: PCT/CN2018/119203
(87) International publication number: WO 2019/109915

(56) References cited:
- EP-A1- 3 043 263
- CN-A- 101 923 348
- CN-A- 104 122 100
- CN-A- 104 181 912
- CN-A- 106 647 723
- CN-A- 107 918 382
- US-A1- 2015 269 793

## Description

### BACKGROUND

### Technical Field

The present application relates to the technical field of automobile diagnosis, and in particular, to an automobile trouble diagnosis method, an automobile trouble diagnosis apparatus, and an electronic device.

### Related Art

An on-board diagnostic (OBD) system is mainly configured to monitor an emission control system of a vehicle during use of the vehicle, so that an emission status of the vehicle during use can be effectively monitored. The OBD system monitors each system and each component of the vehicle online to determine whether an emission of the vehicle exceeds an OBD system threshold set in the emission regulations as a result of a partial or complete failure of each system and each component. If there is an excessive emission, the OBD system needs to determine a specific trouble through diagnosis, store trouble information in a memory of a controller and light a malfunction indicator lamp (MIL) according to corresponding requirements. Relevant information may be read in a form of a diagnostic trouble code (DTC) through a standard automobile diagnosis instrument and a diagnosis interface. Maintenance personnel can quickly and accurately determine a property and a position of a trouble according to definition and prompt of the DTC.

In related art, the document D1 (Patent Application Pub. No.: EP3043263A1) discloses that a service DTC sequencing method includes the steps of receiving a plurality of DTCs; determining which of the plurality of DTCs to diagnose first; and recommending one or more of the plurality of DTCs to diagnose first.

Further, the document D2 (Patent Application Pub. No.: US20150269793A1) discloses a fault code analyzer for a vehicle includes a fault code memory device configured to store a plurality of active and inactive fault codes for the vehicle and a priority processor coupled to the memory device. The priority processor prioritizes each fault code within the plurality of active and inactive fault codes; determine a first root cause fault code, the first root cause fault code corresponding to the highest prioritized fault code; determines a first set of interaction fault codes, the first set of interaction fault codes relating to the first root cause fault code; and provides the first root cause fault code and the first set of interaction fault codes to an interface device of a user.

Currently, a DTC diagnosis step usually includes the following. First, a vehicle model is determined through manual selection or automatic identification. Then a DTC is read and a corresponding maintenance operation is performed according to each DTC. After the maintenance is completed, the DTC is cleared, and it is determined whether the DTC is cleared to determine whether the maintenance is completed. When a vehicle has a trouble, a plurality of DTCs are usually generated. For example, a trouble of a regulated sensor power supply shared by a plurality of sensors may cause each sensor to generate an over-voltage limit DTC and a DTC indicating that the regulated power supply has a trouble. Improving efficiency of resolving a plurality of DTCs when a plurality of DTCs appear becomes a subject actively studied by those skilled in the art.

### SUMMARY

Embodiments of the present invention provide an automobile trouble diagnosis method, an automobile trouble diagnosis apparatus, and an electronic device, to intelligently rank a plurality of DTCs, so that diagnosis efficiency can be greatly improved.

The embodiments of the present invention disclose the following technical solutions.

The invention is disclosed by a method according to claim 1.

In some embodiments, the ranking the main DTCs according to a first priority of a system to which each of the at least two DTCs belongs and a second priority of each of the main DTCs in the system to which the at least two DTC belongs includes:
firstly ranking, based on the first priority of the system to which each of the main DTCs belongs, main DTCs according to systems to which the main DTCs belong; and
secondly ranking the main DTCs in the systems according to the second priority of each of the main DTCs in the system to which the main DTC belongs to obtain the first ranking result.

In some embodiments, the grouping the at least two DTCs according to a DTC association includes:
classifying the associated DTCs in the at least two DTCs into a DTC group; and
classifying each independent DTC of the at least two DTCs into a DTC group, the independent DTC being not associated with other DTCs.

In some embodiments, the method further includes:
determining whether a trouble corresponding to a first DTC in the first ranking result is cleared; and
if the trouble corresponding to the first DTC in the first ranking result is cleared, clearing the first DTC.

In some embodiments, after the clearing the first DTC, the method further includes:
determining whether there is a second DTC associated with the first DTC; and
if there is the second DTC associated with the first DTC, clearing the second DTC.

In some embodiments, the method further includes:
after all of the DTCs in the first ranking result are cleared, detecting whether there is an unranked DTC;
if there is the unranked DTC, ranking the unranked DTC to obtain a second ranking result; and
sequentially clearing DTCs in the second ranking result.

The invention is also disclosed by an apparatus according to claim 7.

In some embodiments, the first ranking module is specifically configured to:
firstly rank, based on the first priority of the system to which each of the main DTCs belongs, the main DTCs according to systems to which the main DTCs belong; and
secondly rank the main DTCs in the systems according to the second priority of each of the main DTCs in the system to which the main DTC belongs to obtain the first ranking result.

In some embodiments, the grouping module is specifically configured to:
classify the associated DTCs in the at least two DTCs into a DTC group; and
classify each independent DTC of the at least two DTCs into a DTC group, the independent DTC being not associated with other DTCs.

In some embodiments, the apparatus further includes:
a second determining module configured to determine whether a trouble corresponding to a first DTC in the first ranking result is cleared; and
a first DTC clearing module configured to: when it is determined that the trouble corresponding to the first DTC in the first ranking result is cleared, clear the first DTC.

In some embodiments, the apparatus further includes:
a second judging module configured to determine whether there is a second DTC associated with the first DTC; and
a second DTC clearing module configured to: when there is a second DTC associated with the first DTC, clear the second DTC.

In some embodiments, the apparatus further includes:
a detecting module configured to: after all of the DTCs in the first ranking result are cleared, detect whether there is an unranked DTC;
a second ranking module configured to: when there is an unranked DTC, rank the unranked DTC to obtain a second ranking result; and
a third DTC clearing module configured to sequentially clear DTCs in the second ranking result.

According to a third aspect, an embodiment of the present invention provides an electronic device, including:
at least one processor; and
a memory communicatively connected to the at least one processor, where
the memory stores an instruction executable by the at least one processor that, when executed by the at least one processor, causes the at least one processor to perform the foregoing automobile trouble diagnosis method.

According to a fourth aspect, an embodiment of the present invention provides a computer program product. The computer program product includes a computer program stored in a non-volatile computer readable storage medium. The computer program includes a program instruction that, when executed by an electronic device, causes the electronic device to perform the foregoing automobile trouble diagnosis method.

According to a fifth aspect, an embodiment of the present invention provides a non-volatile computer readable storage medium. The computer readable storage medium stores a computer executable instruction that is used to cause an electronic device to perform the foregoing automobile trouble diagnosis method.

In the embodiments of the present invention, the obtained at least two DTCs are ranked according to the first priority of the system to which each of the at least two DTCs belongs and the second priority of each of the DTCs in the system to intelligently rank a plurality of DTCs of a vehicle, so as to determine an order for diagnosing the plurality of DTCs, so that the plurality of DTCs may be sequentially resolved according to the ranking result during diagnosis, thereby improving diagnosis efficiency.

### BRIEF DESCRIPTION OF THE DRAWINGS

FIG. 1 is a schematic flowchart of an automobile trouble diagnosis method according to an embodiment of the present invention;
FIG. 2 is a schematic flowchart of an automobile trouble diagnosis method according to an embodiment of the present invention;
FIG. 3 is a schematic diagram of a first-priority table structure according to an embodiment of the present invention;
FIG. 4 is a schematic diagram of a second-priority table structure according to an embodiment of the present invention;
FIG. 5 is a schematic diagram of an automobile trouble diagnosis apparatus according to an embodiment of the present invention;
FIG. 6 is a schematic diagram of an automobile trouble diagnosis apparatus according to an embodiment of the present invention;
FIG. 7 is a schematic structural diagram of hardware of an electronic device according to an embodiment of the present invention.

### DETAILED DESCRIPTION

The technical solutions in the embodiments of the present invention will be described below with reference to the accompanying drawings in the embodiments of the present invention. Obviously, the described embodiments are a part of the present invention, but not all of them. Based on the embodiments of the present invention, all other embodiments obtained by a person of ordinary skill in the art without creative efforts shall fall within the protection scope of the present invention.

In addition, the technical features involved in the various embodiments of the present invention described below can be combined with each other as long as they do not conflict with each other.

### Embodiment 1

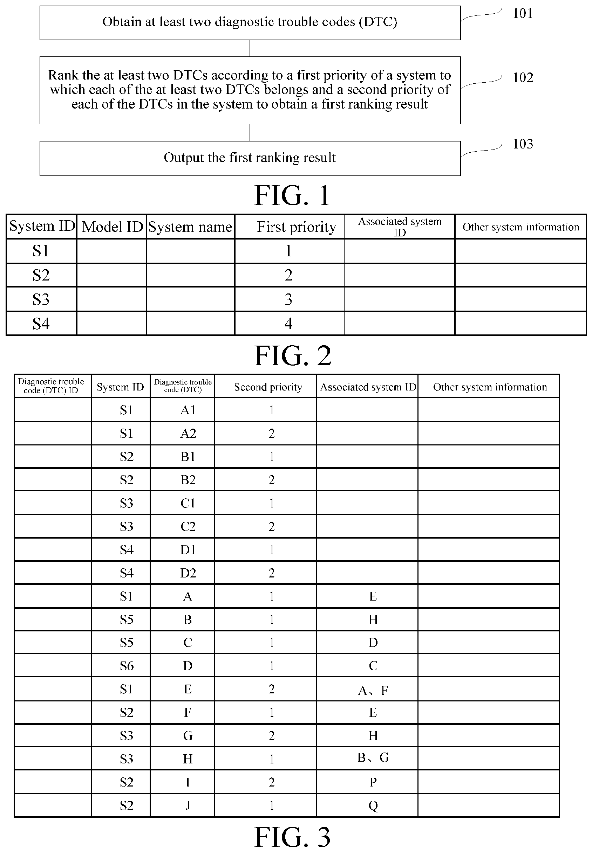

This embodiment of the present invention is an embodiment of an automobile trouble diagnosis method according to the present invention. FIG. 1 is a schematic flowchart of an automobile trouble diagnosis method according to an embodiment of the present invention. The automobile trouble diagnosis method according to an embodiment of the present invention is applied to an electronic device, and may be performed by various types of electronic devices, such as an automobile diagnosis instrument, an embedded computer, an intelligent terminal, etc.

Referring to FIG. 1, the automobile trouble diagnosis method includes the following steps.

101: At least two DTCs are obtained.

The diagnostic trouble code (DTC) is a code defined for each trouble in an electronic control unit (ECU) of an automobile. The DTC may also be referred to as an accident code, an error code, or another name. The DTC may be used as a parameter for assisting a maintenance technician in diagnosing a problem of the vehicle. When the vehicle has one or more troubles, a plurality of DTCs are usually generated. The electronic device may obtain the at least two DTCs by sending a DTC request instruction to a to-be-diagnosed vehicle, and receive at least two DTCs fed back by the vehicle based on the DTC request instruction. In some embodiments, the electronic device may remotely receive the at least two DTCs through a network.

102: The at least two DTCs are ranked according to a first priority of a system to which each of the at least two DTCs belongs and a second priority of each of the DTCs in the system to obtain a first ranking result.

In this embodiment of the present invention, the system may be formed through different classification of vehicles based on models of the vehicles. Based on the models of the vehicles, the vehicles are classified into: an engine system, an anti-locked braking system (ABS), a transmission system, an anti-theft system, an instrument cluster system, etc. The model may be formed based on a brand, a manufacturer, a production date, or a vehicle identification number (VIN) of a vehicle. The model is formed based on the brand to which the model belongs, such as Audi, Bentley and Lamborghini, etc.

In this embodiment of the present invention, the first priority of the system to which each DTC of the vehicle belongs and the second priority of each DTC in the system may be recorded in a database.

FIG. 2 shows a first-priority table structure recorded in a database and used to represent a system priority. A system ID is a unique identification code of the system. A model ID is a model to which the system belongs. A system name is a description of the system name. A first priority indicates the system priority. As shown in FIG. 2, a relationship among all system priorities is "S1">"S2">"S3">"S4". An associated system ID indicates other systems with which the system is associated. Other system information includes one or more fields (or items) that are used to describe relevant information of the system. One field is used to abstractly describe the relevant information of the system. The first priority corresponding to each system may be determined based on an industry standard, or may be determined based on automobile diagnosis experience. Through the first-priority table structure, the first priority of the system to which each of the at least two DTCs belongs can be determined.

Similarly, FIG. 3 shows a table structure of a second priority of each DTC in the system recorded in the database. A DTC ID is a unique identification code of a DTC. A system ID is used to identify a system to which the DTC belongs. The DTC may be expressed as a number, through which a specific trouble in the system may be learned. A second priority indicates a priority of the DTC in the system, that is, priorities of DTCs that belong to a same system. As shown in FIG. 3, DTCs "A1", "A2", "A" and "E" belong to a system "S1". A priority relationship among the DTCs is "A1"="A">"A2"="E". An associated DTC indicates a DTC associated with the DTC. Other DTC information includes one or more fields (or items) that are used to describe relevant information of the DTC. One field is used to abstractly describe the relevant information of the DTC. The second priority of each DTC in the system may be determined based on an industry standard, or may be determined based on automobile diagnosis experience. Through the second-priority table structure, the second priority of each of the at least two DTCs in the system can be determined. The first-priority table structure and the second-priority table structure are associated through a system ID field. For example, a system ID of the DTC "A" obtained through the first-priority table structure is "100". In this case, through the system ID field, information of a data record of the system with the system ID "100" can be obtained from the second-priority table structure, so as to obtain a second priority of "A" in the system.

It should be noted that the database includes, but is not limited to: a local (an electronic device that performs trouble diagnosis on an automobile, such as an automobile diagnosis instrument, etc.) database or a database on other devices or servers accessible through a network. In addition, the first-priority table structure and the second-priority table structure in the database may also be modeled in other manners. Other modeling manners are roughly similar to those included in the table structures in FIG. 2 and FIG. 3.

It should be further noted that a relationship among first priorities of systems to which all of the DTCs belong and a relationship among second priorities of all of the DTCs in the systems include, but are not limited to, a database implementation form. In some implementations, the relationship may be implemented in a file form, for example, a configuration file, an extensible markup language (XML) file, etc.

Through the first-priority table structure and the second-priority table structure, the first priority of the system to which each of the at least two DTCs belongs and the second priority of each of the DTCs in the system can be determined. Therefore, the electronic device may rank the at least two DTCs based on the first priority of the system to which each of the at least two DTCs belongs and the second priority of each of the DTCs in the system, to obtain the first ranking result. A specific ranking method includes, but is not limited to the following: Firstly, the at least two DTCs are ranked according to systems to which the DTCs belong based on the first priority of the system to which each of the DTCs belongs. Then the DTCs in the systems are ranked according to the second priority of each of the DTCs in the system to which the DTC belongs to obtain the first ranking result. The obtained at least two DTCs include: "A1", "A2", "B1", "B2", "C1", "C2", "D1", "D2". Through the second-priority table structure, it may be learned that a second priority of "A1" in the system is 1, a second priority of "A2" in the system is 2, and "A1" and "A2" belong to a system "S1". A second priority of "B1" in the system is 1, a second priority of "B2" in the system is 2, and "B1" and "B2" belong to a system "S2". A second priority of "C1" in the system is 1, a second priority of "C2" in the system is 2, and "C1" and "C2" belong to a system "S3". A second priority of "D1" in the system is 1, a second priority of "D2" in the system is 2, and "D1" and "D2" belong to a system "S4". Through the second-priority table structure, a first priority of "S1" is 1, a first priority of "S2" is 2, a first priority of "S3" is 3 and a first priority of "S4" is 4. For the first priority and the second priority, 1 is preset to be a highest priority, and a larger number indicates a lower priority. Therefore, "A1", "A2", "B1", "B2", "C1", "C2", "D1" and "D2" are ranked, that is, the priority of the DTC belonging to the system "S1" is higher than those belonging to other systems, and then ranking is performed. The obtained first ranking result is: "A1", "A2", "B1", "B2", "C1", "C2", "D1 ", "D2".

103: The first ranking result is output.

In this embodiment of the present invention, the outputting the first ranking result includes, but is not limited to: displaying the first ranking result in the electronic device; or sending the first ranking result to other electronic devices (such as a smart phone or a tablet, etc.), and displaying the first ranking result on an interface of other electronic devices. The first ranking result may be displayed in any suitable manner, for example, a guided form, text, icons, audio or video. The first ranking result is output to guide a user to sequentially clear a trouble corresponding to the DTC and sequentially clear the DTC according to the first ranking result, or to automatically clear the trouble corresponding to the DTC and clear the DTC according to the first ranking result.

It should be noted that, in some embodiments, the outputting the first ranking result may further include: directly directing the user to sequentially clear the trouble corresponding to the DTC and sequentially clear the DTC according to the first ranking result instead of directly displaying the first ranking result on the interface.

In this embodiment of the present invention, the obtained at least two DTCs are ranked according to the first priority of the system to which each of the at least two DTCs belongs and the second priority of each of the DTCs in the system to intelligently rank a plurality of DTCs of a vehicle, so as to determine an order for diagnosing the plurality of DTCs, so that the plurality of DTCs may be sequentially resolved according to the ranking result during diagnosis without blindly resolving each DTC, thereby greatly improving diagnosis efficiency and reducing diagnosis costs.

### Embodiment 2

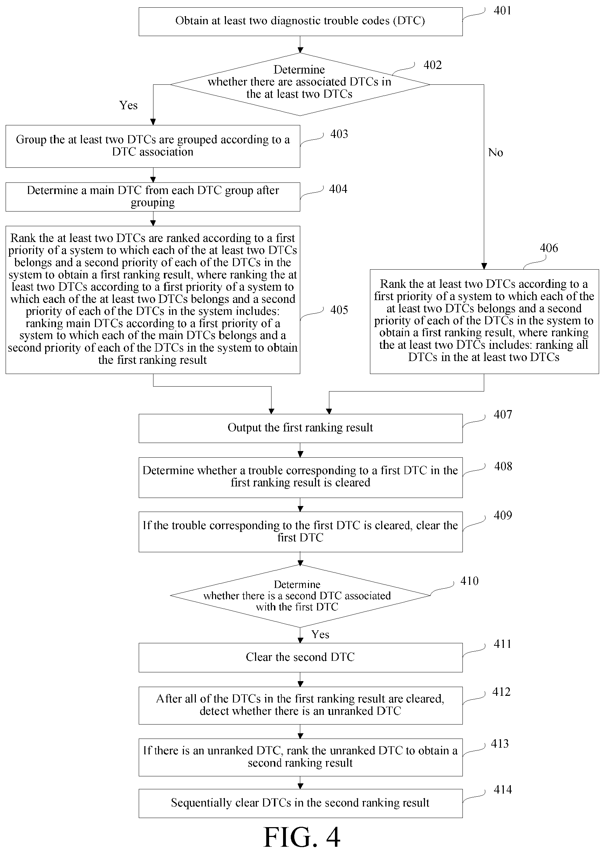

This embodiment of the present invention is an embodiment of an automobile trouble diagnosis method according to the present invention. FIG. 4 is a schematic flowchart of an automobile trouble diagnosis method according to an embodiment of the present invention. The automobile trouble diagnosis method according to an embodiment of the present invention is applied to an electronic device, and may be performed by various types of electronic devices, such as an automobile diagnosis instrument, an embedded computer, an intelligent terminal, etc.

Referring to FIG. 4, the automobile trouble diagnosis method includes the following steps.

401: At least two DTCs are obtained.

The electronic device may obtain the at least two DTCs by sending a DTC request instruction to a to-be-diagnosed vehicle, and receive at least two DTCs fed back by the vehicle based on the DTC request instruction. In some embodiments, the electronic device may remotely receive the at least two DTCs through a network to obtain the at least two DTCs.

402: It is determined whether there are associated DTCs in the at least two DTCs.

The associated DTCs may be determined according to a mapping relationship in a preset association list. It may be determined according to the second-priority table structure in FIG. 3 whether there are associated DTCs in the at least two DTCs. As long as there are two or more associated DTCs in the at least two DTCs, it can be determined that there are associated DTCs in the at least two DTCs. If no DTCs in the at least two DTCs are associated, it is determined that there are no associated DTCs in the at least two DTCs. For example, the obtained at least two DTCs include: "E", "F" and "G". It may be learned through the second-priority table structure that DTCs "A" and "F" are associated with "E", DTCs "E" and "G" are associated with "F" and a DTC "H" is associated with "E". Since "E" is associated with "F", it is determined that there are associated DTCs in the at least two DTCs. For another example, the obtained at least two DTCs include: "H", "I" and "J". It may be learned through the second-priority table structure that DTCs "G" and "B" are associated with "H", a DTC "P" is associated with "I" and a DTC "Q" is associated with "J". Since "H", "I" and "J" are not associated with each other, it is determined that there are no associated DTCs in the at least two DTCs.

403: If there are associated DTCs in the at least two DTCs, the at least two DTCs are grouped according to a DTC association.

The grouping the at least two DTCs according to a DTC association includes, but is not limited to: classifying the associated DTCs in the at least two DTCs into a DTC group; and classifying each of the at least two DTCs into a DTC group, the independent DTC being not associated with other DTCs. For example, the obtained at least two DTCs include: "A", "E", "F", "G", "H", "I" and "J". It may be learned through the second-priority table structure that a DTC "E" is associated with "A", DTCs "A" and "F" are associated with "E", a DTC "E" is associated with "F", a DTC "H" is associated with "G", DTCs "G" and "B" are associated with "H", a DTC "P" is associated with "I" and a DTC "Q" is associated with "J". Therefore, the associated DTCs in the at least two DTCs are classified into one DTC group, and each independent DTC in the at least two DTCs is classified into one DTC group. Obtained grouping results are as follows. "A", "E" and "F" form a DTC group. "G" and "H" form a DTC group. "I" forms a DTC group. "J" forms a DTC group.

404: A main DTC is determined from each DTC group after grouping.
the determining a main DTC from each DTC group after grouping includes, but is not limited to: rank the DTCs in each DTC group respectively; and determine, as the main DTC, DTCs in each DTC group that are ranked within a preset ranking range. For example, the at least two DTCs are grouped according to a DTC association to obtain the following grouping results. "A", "E" and "F" form a DTC group. "G" and "H" form a DTC group. "I" forms a DTC group. "J" forms a DTC group. Ranking the DTCs in each DTC group respectively includes, but is not limited to: firstly ranking systems to which DTCs in each DTC group belong according to a first priority of a system to which each DTC group belongs; and secondly ranking the DTCs in the systems according to a second priority of each of the DTCs in each DTC group in the system to which the DTC belongs to obtain a second ranking result. For example, "A" and "E" belong to the system "S1". A second priority of "A" in "S1" is 1, and a second priority of "E" in "S1" is 2. "F" belongs to the system "S2". A second priority of "F" in "S2" is 1. A first priority of "S1" is 1, and a first priority of "S2" is 2. For the first priority and the second priority, 1 is preset to be a highest priority, and a larger number indicates a lower priority. In this case, an obtained ranking result is "A", "E", "F". Similarly, if "G" and "H" belong to the system "S3", a second priority of "G" in "S3" is 2, and a second priority of "H" in "S3" is 1. In this case, an obtained ranking result may be "H", "G". It should be noted that a DTC group with only one DTC does not need to be ranked. Then, DTCs in each group ranked within a preset ranking range are determined as the main DTC. The preset ranking range is a first ranking position. According to a ranking result of each group, obtained main DTCs are: "A", "H", "I" and "J".

405: The at least two DTCs are ranked according to a first priority of a system to which each of the at least two DTCs belongs and a second priority of each of the DTCs in the system to obtain a first ranking result. If there are associated DTCs in the at least two DTCs, the ranking the at least two DTCs according to a first priority of a system to which each of the at least two DTCs belongs and a second priority of each of the DTCs in the system includes: ranking main DTCs according to a first priority of a system to which each of the main DTCs belongs and a second priority of each of the main DTCs in the system to obtain the first ranking result.

Since clearing of the main DTC may result in automatic clearing of a DTC associated with the main DTC, ranking the at least two DTCs may include ranking the main DTCs. For example, the obtained at least two DTCs include: "A", "E", "F", "G", "H", "I" and "J". The main DTCs determined from each DTC group after grouping are: "A", "H", "I" and "J". In this case, only "A", "H", "I" and "J" need to be ranked to obtain the first ranking result. Ranking the main DTCs may reduce to-be-ranked DTCs, thereby improving ranking efficiency.

In some embodiments, the ranking the at least two DTCs according to a first priority of a system to which each of the at least two DTCs belongs and a second priority of each of the DTCs in the system to which the DTC belongs specifically includes: firstly ranking, based on the first priority of the system to which each of the DTCs belongs, the at least two DTCs according to systems to which the DTCs belong; and secondly ranking the DTCs in the systems according to the second priority of each of the DTCs in the system to which the DTC belongs to obtain the first ranking result.

Similarly, if there are associated DTCs in the at least two DTCs, ranking the main DTCs specifically includes: ranking, based on a first priority of a system to which the main DTC belongs, the main DTCs according to systems to which the DTCs belong for the first time; and ranking the main DTCs in the systems according to a second priority of the main DTC in the system to which the main DTC belongs for the second time to obtain the first ranking result.

The main DTCs "A", "H", "I", "J" and "A" belongs to the system "S1", "H" belongs to the system "S3", and "I" and "J" belong to the system "S2". A second priority of "I" in "S2" is 2, and a second priority of "J" in "S2" is 1. The first priority of "S1" is 1, the first priority of "S2" is 2 and the first priority of "S3" is 3. For the first priority and the second priority, 1 is preset to be a highest priority, and a larger number indicates a lower priority. In this case, an obtained ranking result is "A", "J", "I" and "H".

406: The at least two DTCs are ranked according to a first priority of a system to which each of the at least two DTCs belongs and a second priority of each of the DTCs in the system to obtain a first ranking result. If there are no associated DTCs in the at least two DTCs, ranking the at least two DTCs specifically includes: ranking all DTCs in the at least two DTCs.

The obtained at least two DTCs include: "H", "I" and "J". "H", "I" and "J" are not associated with each other. In this case, "H", "I" and "J" are ranked in the manner same as above. Therefore, details are not described herein again.

407: The first ranking result is output.

In this embodiment of the present invention, the outputting the first ranking result includes, but is not limited to: displaying the first ranking result in the electronic device; or sending the first ranking result to other electronic devices (such as a smart phone or a tablet, etc.), and displaying the first ranking result on an interface of other electronic devices. The first ranking result may be displayed in any suitable manner, for example, a guided form, text, icons, audio or video. The first ranking result is output to guide a user to sequentially clear a trouble corresponding to the DTC and sequentially clear the DTC according to the first ranking result, or to automatically clear the trouble corresponding to the DTC and clear the DTC according to the first ranking result.

It should be noted that, in some embodiments, the outputting the first ranking result may further include: directly directing the user to sequentially clear the trouble corresponding to the DTC and sequentially clear the DTC according to the first ranking result instead of directly displaying the first ranking result on the interface.

In this embodiment of the present invention, the automobile trouble diagnosis method further includes the following steps.

408: It is determined whether a trouble corresponding to a first DTC in the first ranking result is cleared.

When there are no associated DTCs in the at least two DTCs, a first DTC in the first ranking result is the DTC in the at least two DTCs. When there are associated DTCs in the at least two DTCs, the first DTC in the first ranking result is the DTC in the main DTCs. For example, the main DTCs are "A", "H", "I" and "J". In this case, any of "A", "H", "I" and "J" may be the first DTC. It may be determined using a trouble detection instruction input by a user or through automatic detection whether the trouble corresponding to the first DTC in the first ranking result is cleared.

409: If the trouble corresponding to the first DTC is cleared, the first DTC is cleared.

If it is determined that the trouble corresponding to the first DTC in the first ranking result is cleared, the first DTC is cleared. A first DTC clearing instruction input by the user may be received to clear the first DTC, or the first DTC may be automatically cleared.

410: It is determined whether there is a second DTC associated with the first DTC.

After the first DTC is cleared, it is determined whether there is a second DTC associated with the first DTC. For example, the obtained at least two DTCs include: "A", "E", "F", "G", "H", "I" and "J". "A", "E" and "F" are associated with each other and form a DTC group. "G" and "H" are associated with each other and form a DTC group. "I" is not associated with other DTCs in the at least two DTCs and forms a DTC group. "J" is not associated with other DTCs in the at least two DTCs and forms a DTC group. The main DTC determined from each DTC group after grouping includes: "A", "H", "I" and "J". After "A" is cleared, it is determined whether "E" and "F" still exist.

411: The second DTC is cleared.

If the second DTC exists, because the second DTC does not exist in the first ranking result, and the second DTC may still exist after the first DTC is cleared, after the first DTC is cleared, the second DTC needs to be cleared if the second DTC may still exist. A second DTC clearing instruction input by the user may be received to clear the second DTC, or the second DTC may be automatically cleared.

412: After all of the DTCs in the first ranking result are cleared, it is detected whether there is an unranked DTC.

After all of the DTCs in the first ranking result are cleared, there may still be an unranked DTC. Therefore, it needs to be detected whether there is an unranked DTC to ensure that all of the at least two DTCs are cleared. For example, the obtained at least two DTCs include: "A", "E", "F", "G", "H", "I" and "J". The main DTC determined from each DTC group after grouping includes: "A", "H", "I" and "J". After "A", "H", "I" and "J" are cleared, it is determined whether there are the following unranked DTCs: "H", "I" and "J".

413: If there is an unranked DTC, the unranked DTC is ranked to obtain a second ranking result.

If there is an unranked DTC, the unranked DTC is ranked to obtain a second ranking result. For example, there are unranked DTCs: "H", "I" and "J". In this case, "H", "I" and "J" are ranked to obtain the second ranking result. A ranking manner is the same as above, and therefore details are not described herein again.

414: DTCs in the second ranking result are sequentially cleared.

Sequentially clearing DTCs in the second ranking result includes, but is not limited to: receiving a third DTC clearing instruction input by the user according to the second ranking result to clear the DTCs in the second ranking result or automatically clearing the DTCs in the second ranking result.

It may be understood that, in some other embodiments, steps 408 to 414 may not be required in different embodiments. In addition, those skilled in the art may understand, according to the descriptions of the embodiments of the present invention, that in different embodiments, if there is no contradiction, steps 401 to 414 may be performed in different orders.

It should be noted that, for technical details not described in detail in steps 401 to 414 in the embodiments of the present invention, refer to the specific descriptions of the foregoing embodiments.

In this embodiment of the present invention, the obtained at least two DTCs are ranked according to the first priority of the system to which each of the at least two DTCs belongs and the second priority of each of the DTCs in the system to intelligently rank a plurality of DTCs of a vehicle, so as to determine an order for diagnosing the plurality of DTCs, so that the plurality of DTCs may be sequentially resolved according to the ranking result during diagnosis without blindly resolving each DTC, thereby greatly improving diagnosis efficiency and reducing diagnosis costs. In addition, when there are associated DTCs in the at least two DTCs, ranking the main DTCs may reduce to-be-ranked DTCs, thereby improving ranking efficiency, further improving diagnosis efficiency.

### Embodiment 3

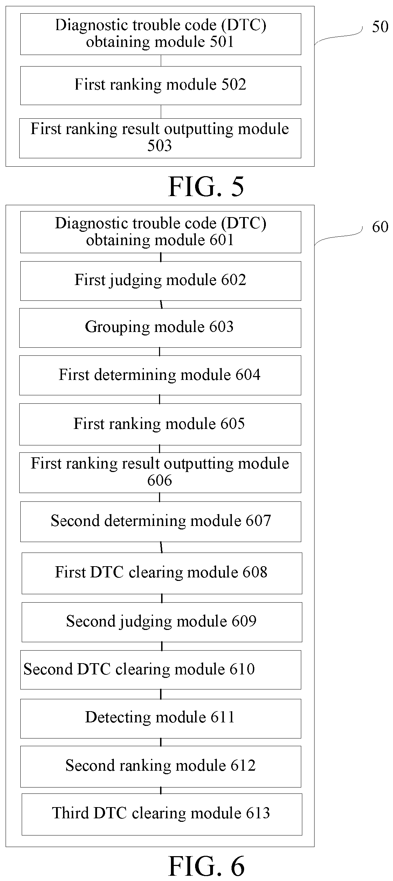

This embodiment of the present invention is an embodiment of an automobile trouble diagnosis apparatus according to the present invention. FIG. 5 is a schematic diagram of an automobile trouble diagnosis apparatus according to an embodiment of the present invention. The automobile trouble diagnosis apparatus is applied to an electronic device. The electronic device may be an automobile diagnosis instrument, an embedded computer, an intelligent terminal, etc.

Referring to FIG. 5, the automobile trouble diagnosis apparatus 50 includes: a DTC obtaining module 501, a first ranking module 502 and a first ranking result outputting module 503.

The DTC obtaining module 501 is configured to obtain at least two DTCs.

The DTC obtaining module 501 may obtain the at least two DTCs by sending a DTC request instruction to a to-be-diagnosed vehicle, and receive at least two DTCs fed back by the vehicle based on the DTC request instruction. In some embodiments, the DTC obtaining module 501 may remotely receive the at least two DTCs through a network.

The first ranking module 502 is configured to rank the at least two DTCs according to a first priority of a system to which each of the at least two DTCs belongs and a second priority of each of the DTCs in the system to obtain a first ranking result.

The system includes but is not limited to: an engine system, an ABS, a transmission system, an anti-theft system, an instrument cluster system, etc. The first priority of the system to which each DTC belongs and the second priority of each DTC in the system are recorded in a database, and the first ranking module 502 accesses the database to determine the first priority of the system to which each of the at least two DTCs belongs and the second priority of each DTC in the system, and ranks the at least two DTCs based on the first priority of the system to which each of the two DTCs belongs and the second priority of each DTC in the system, to obtain the first ranking result, helping intelligently rank a plurality of DTCs of the vehicle without blindly resolving each DTC, thereby greatly improving diagnosis efficiency and reducing diagnosis costs.

The first ranking result outputting module 503 is configured to output the first ranking result.

That the first ranking result outputting module 503 outputs the first ranking result includes, but is not limited to: displaying the first ranking result in the electronic device; or sending, by the first ranking result outputting module 503, the first ranking result to other electronic devices (such as a smart phone or a tablet, etc.), and displaying the first ranking result on an interface of other electronic devices. The first ranking result may be displayed in any suitable manner, for example, a guided form, text, icons, audio or video. The first ranking result is output to guide a user to sequentially clear a trouble corresponding to the DTC and sequentially clear the DTC according to the first ranking result, or to automatically clear the trouble corresponding to the DTC and clear the DTC according to the first ranking result.

It should be noted that, in this embodiment of the present invention, the automobile trouble diagnosis apparatus 50 may perform the automobile trouble diagnosis method provided in Embodiment 1 of the present invention, and has corresponding functional modules to perform the method and beneficial effects thereof. For technical details not described in detail in the embodiment of the automobile trouble diagnosis apparatus 50, refer to the automobile trouble diagnosis method provided in Embodiment 1 of the present invention.

### Embodiment 4

This embodiment of the present invention is an embodiment of an automobile trouble diagnosis apparatus according to the present invention. FIG. 6 is a schematic diagram of an automobile trouble diagnosis apparatus according to an embodiment of the present invention. The automobile trouble diagnosis apparatus is applied to an electronic device. The electronic device may be an automobile diagnosis instrument, an embedded computer, an intelligent terminal, etc.

Referring to FIG. 6, the automobile trouble diagnosis apparatus 60 includes a DTC obtaining module 601, a first judging module 602, a grouping module 603, a first determining module 604 and a first ranking module 605.

The DTC obtaining module 601 is configured to obtain at least two DTCs.

The DTC obtaining module 601 may obtain the at least two DTCs by sending a DTC request instruction to a to-be-diagnosed vehicle, and receive at least two DTCs fed back by the vehicle based on the DTC request instruction. In some embodiments, the DTC obtaining module 601 may remotely receive the at least two DTCs through a network to obtain the at least two DTCs.

The first judging module 602 is configured to determine whether there are associated DTCs in the at least two DTCs.

The associated DTCs may be determined according to a mapping relationship in a preset association list. It may be determined according to the second-priority table structure in FIG. 3 whether there are associated DTCs in the at least two DTCs. As long as there are two or more associated DTCs in the at least two DTCs, the first judging module 602 can determine that there are associated DTCs in the at least two DTCs. If no DTCs in the at least two DTCs are associated, the first judging module 602 can determine that there are no associated DTCs in the at least two DTCs.

The grouping module 603 is configured to: if there are associated DTCs in the at least two DTCs, group the at least two DTCs according to a DTC association.

The grouping module 603 is specifically configured to: classify the associated DTCs in the at least two DTCs into a DTC group; and classify each of the at least two DTCs into a DTC group, the independent DTC being not associated with other DTCs.

The first determining module 604 is configured to determine a main DTC from each DTC group after grouping.

The first determining module 604 is specifically configured to: rank the DTCs in each DTC group respectively; and determine, as the main DTC, DTCs in each DTC group that are ranked within a preset ranking range.

The first ranking module 605 is configured to rank the at least two DTCs according to a first priority of a system to which each of the at least two DTCs belongs and a second priority of each of the DTCs in the system to obtain a first ranking result. If there are associated DTCs in the at least two DTCs, the ranking the at least two DTCs according to a first priority of a system to which each of the at least two DTCs belongs and a second priority of each of the DTCs in the system includes: ranking main DTCs according to a first priority of a system to which each of the main DTCs belongs and a second priority of each of the main DTCs in the system to obtain the first ranking result.

Since clearing of the main DTC may result in automatic clearing of a DTC associated with the main DTC, that the first ranking module 605 ranks the at least two DTCs may include ranking the main DTCs. Ranking the main DTCs may reduce to-be-ranked DTCs, thereby improving ranking efficiency.

In some embodiments, ranking performed by the first ranking module 605 specifically includes: firstly ranking, based on the first priority of the system to which each of the DTCs belongs, the at least two DTCs according to systems to which the DTCs belong; and secondly ranking the DTCs in the systems according to the second priority of each of the DTCs in the system to which the DTC belongs to obtain the first ranking result. Similarly, if there are associated DTCs in the at least two DTCs, that the first ranking module 605 ranks the main DTCs specifically includes: firstly ranking, based on a first priority of a system to which the main DTC belongs, the main DTCs according to systems to which the DTCs belong; and secondly ranking the main DTCs in the systems according to a second priority of the main DTC in the system to which the main DTC belongs to obtain the first ranking result.

In this embodiment of the present invention, if there are no associated DTCs in the at least two DTCs, that the first ranking module 605 ranks the at least two DTCs specifically includes: ranking all DTCs in the at least two DTCs. A ranking manner is the same as above, and therefore details are not described herein again.

The first ranking result outputting module 606 is configured to output the first ranking result.

In this embodiment of the present invention, that the first ranking result outputting module 606 outputs the first ranking result includes, but is not limited to: displaying the first ranking result in the electronic device; or sending, by the first ranking result outputting module 606, the first ranking result to other electronic devices (such as a smart phone or a tablet, etc.), and displaying the first ranking result on an interface of other electronic devices. The first ranking result may be displayed in any suitable manner, for example, a guided form, text, icons, audio or video. The first ranking result is output to guide a user to sequentially clear a trouble corresponding to the DTC and sequentially clear the DTC according to the first ranking result, or to automatically clear the trouble corresponding to the DTC and clear the DTC according to the first ranking result.

In this embodiment of the present invention, the automobile trouble diagnosis apparatus 60 further includes a second determining module 607, a first DTC clearing module 608, a second determining module 609, a DTC clearing module 610, a detecting module 611, a second ranking module 612 and a third DTC clearing module 613.

The second determining module 607 is configured to determine whether a trouble corresponding to a first DTC in the first ranking result is cleared.

When there are no associated DTCs in the at least two DTCs, a first DTC in the first ranking result is the DTC in the at least two DTCs. When there are associated DTCs in the at least two DTCs, the first DTC in the first ranking result is the DTC in the main DTCs.

The first DTC clearing module 608 is configured to: when it is determined that the trouble corresponding to the first DTC in the first ranking result is cleared, clear the first DTC.

If it is determined that the trouble corresponding to the first DTC in the first ranking result is cleared, the first DTC clearing module 608 clears first DTC. The first DTC clearing module 608 may receive a first DTC clearing instruction input by the user to clear the first DTC, or may automatically clear the first DTC.

The second judging module 609 is configured to determine whether there is a second DTC associated with the first DTC.

After the first DTC clearing module 608 clears the first DTC, the second judging module 609 determines whether there is a second DTC associated with the first DTC.

The second DTC clearing module 610 is configured to: when there is a second DTC associated with the first DTC, clear the second DTC.

If the second DTC exists, because the second DTC does not exist in the first ranking result, and the second DTC may still exist after the first DTC clearing module 608 clears the first DTC, after the first DTC clearing module 608 clears the first DTC, the second DTC needs to be cleared through the second DTC clearing module 610 if the second judging module 609 detects that the second DTC still exists. The second DTC clearing module 610 may receive a second DTC clearing instruction input by the user to clear the second DTC, or may automatically clear the second DTC.

The detecting module 611 is configured to: after all of the DTCs in the first ranking result are cleared, detect whether there is an unranked DTC.

After all of the DTCs in the first ranking result are cleared, there may still be an unranked DTC. Therefore, the detecting module 611 needs to detect whether there is an unranked DTC to ensure that all of the at least two DTCs are cleared.

The second ranking module 612 is configured to: when there is an unranked DTC, rank the unranked DTC to obtain a second ranking result.

If there is an unranked DTC, the second ranking module 612 ranks the unranked DTC to obtain a second ranking result. A ranking manner is the same as above, and therefore details are not described herein again.

The third DTC clearing module 613 is configured to sequentially clear DTCs in the second ranking result.

That the third DTC clearing module 613 sequentially clears DTCs in the second ranking result includes, but is not limited to: receiving a third DTC clearing instruction input by the user according to the second ranking result to clear the DTCs in the second ranking result or automatically clearing the DTCs in the second ranking result.

It should be noted that, in this embodiment of the present invention, the automobile trouble diagnosis apparatus 60 may perform the automobile trouble diagnosis method provided in Embodiment 2 of the present invention, and has corresponding functional modules to perform the method and beneficial effects thereof. For technical details not described in detail in the embodiment of the automobile trouble diagnosis apparatus 60, refer to the automobile trouble diagnosis method provided in Embodiment 2 of the present invention.

### Embodiment 5

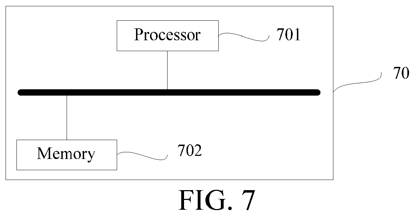

FIG. 7 is a schematic structural diagram of hardware of an electronic device according to an embodiment of the present invention. As shown in FIG. 7, the electronic device 70 includes:
one or more processors 701 and a memory 702. One processor 701 is used as an example in FIG. 7.

The processor 701 and the memory 702 may be connected through a bus or in other manners. In FIG. 7, that the processor and the memory are connected through a bus is used as an example.

The memory 702 is a non-volatile computer-readable storage medium, and may be configured to store a non-volatile software program, a non-volatile computer executable program, and a module, such as a program instruction/module (the DTC obtaining module 601, the first judging module 602, the grouping module 603, the first determining module 604, the first ranking module 605, the first ranking result outputting module 606, the second determining module 607, the first DTC clearing module 608, the second judging module 609, the second DTC clearing module 610, the detecting module 611, the second ranking module 612 and the third DTC clearing module 613 shown in FIG. 6)corresponding to the automobile trouble diagnosis method in the embodiments of the present invention. The processor 701 executes various function applications and data processing of the electronic device by running the non-volatile software program, the instruction and the unit stored in the memory 702, that is, implements the automobile trouble diagnosis method provided in the foregoing method embodiment.

The memory 702 may include a program storage area and a data storage area. The program storage area may store an operating system and an application program that is required for at least one function. The data storage area may store data created according to use of the electronic device, etc. In addition, the memory 702 may include a high speed random access memory, and may further include a non-volatile memory, such as at least one magnetic disk storage device, a flash memory device or other non-volatile solid-state storage devices. In some embodiments, the memory 702 may optionally include memories remotely disposed relative to the processor 701, and these remote memories may be connected to the electronic device through a network. Embodiments of the network include but are not limited to, the Internet, an intranet, a local area network, a mobile communication network and a combination thereof.

The one or more units are stored in the memory 702, and when executed by the one or more processors 701, perform the automobile trouble diagnosis method in the foregoing method Embodiment 1 and/or Embodiment 2, perform steps 401 to 414 in the foregoing method in FIG. 4 or implement functions of the modules 601 to 613 in FIG. 6.

The electronic device may perform the automobile trouble diagnosis method in the foregoing method Embodiment 1 and/or Embodiment 2 in the present invention, and has corresponding functional modules and beneficial effects for performing the method. For technical details not described in detail in the embodiment of the electronic device, refer to the automobile trouble diagnosis method provided in Embodiment 1 and/or Embodiment 2 of the present invention.

An embodiment of the present invention provides a computer program product. The computer program product includes a computer program stored in a non-volatile computer readable storage medium. The computer program includes a program instruction that, when executed by an electronic device, causes the electronic device to perform the foregoing automobile trouble diagnosis method. Step 401 to step 414 of the foregoing method in FIG. 4 are performed, or functions of the modules 601 to 613 in FIG. 6 are implemented.

An embodiment of the present invention provides a non-volatile computer readable storage medium. The computer readable storage medium stores a computer executable instruction that is used to cause an electronic device to perform the foregoing automobile trouble diagnosis method. Step 401 to step 414 of the foregoing method in FIG. 4 are performed, or functions of the modules 601 to 613 in FIG. 6 are implemented.

The electronic device in this embodiment of the present application may exist in various forms, including but not limited to the following.
(1) Automobile diagnosis instrument: This type of electronic device is a professional instrument for automobile detection, which can detect performance of a vehicle in real time and detect a vehicle trouble, and is a necessary tool for vehicle detection. The automobile diagnosis instrument may include: a hand-held automobile diagnosis instrument, a mobile automobile diagnosis instrument, etc.
(2) Embedded computer: This type of electronic device is generally a "dedicated" computer, which refers to a computer dedicated for a specific application, such as a computer dedicated for automobile diagnosis, and is application-centric, and is suitable for an application-specific computer with strict requirements on a function, reliability, costs, a size, and power consumption.
(3) An intelligent terminal with an automobile trouble diagnosis function, such as a smart phone and an IPAD, etc.

It should be noted that, the apparatus embodiment described above is merely exemplary, and the modules described as separate components may or may not be physically separate, the components displayed as units may or may not be physical units, that is, may be located in one place, or may be distributed on a plurality of network units. Part or all of the modules may be selected according to actual needs to achieve the objective of the solution of this embodiment

Through the description of the above embodiments, a person skilled in the art can clearly understand that the embodiments can be implemented by means of software plus a general hardware platform, and certainly, can also be implemented by hardware. A person of ordinary skill in the art can understand that all or part of the procedures in the method of the embodiment can be completed by computer program instructions related hardware. The program can be stored in a computer-readable storage medium, and when the program is executed, the procedure of the embodiment of each method may be included. The storage medium may be a magnetic disk, an optical disc, a read-only memory (ROM), or a random access memory (RAM).

Finally, it should be noted that: the above embodiments are only used to describe the technical solution of the present invention, but not limited thereto; under the thought of the present invention, the technical features in the above embodiments or different embodiments may also be combined. The steps can be implemented in any order, and there are many other variations of different aspects of the invention as described above, for brevity, they are not provided in the details; although the present invention is described in detail with reference to the foregoing embodiments, a person of ordinary skill in the art should understand that: it can still modify the technical solutions described in the foregoing embodiments, or equivalently replace some of the technical features.

## Claims

1. An automobile trouble diagnosis method, **characterized by** comprising:
obtaining at least two diagnostic trouble codes, DTCs;
determining whether there are associated DTCs in the at least two DTCs according to a mapping relationship in a preset association list;
if there are associated DTCs in the at least two DTCs, grouping the at least two DTCs to obtain DTC groups according to a DTC association;
ranking the DTCs in each DTC group respectively; whereby the ranking comprises:
determining DTCs from each DTC group that are ranked within a preset ranking range as main DTCs;
ranking the main DTCs according to a first priority of a system to which each of the at least two DTCs belongs and a second priority of each of the main DTCs in the system to obtain a first ranking result; and
outputting the first ranking result to an electronic device.

2. The method according to claim 1, wherein the ranking the main DTCs according to a first priority of a system to which each of the at least two DTCs belongs and a second priority of each of the main DTCs in the system to which the at least two DTC belongs comprises:
firstly ranking, based on the first priority of the system to which each of the main DTCs belongs, the main DTCs according to systems to which the main DTCs belong; and
secondly ranking the main DTCs in the systems according to the second priority of each of the main DTCs in the system to which the main DTC belongs to obtain the first ranking result.

3. The method according to claim 1, wherein the grouping the at least two DTCs according to a DTC association comprises:
classifying the associated DTCs in the at least two DTCs into a DTC group; and
classifying each independent DTC of the at least two DTCs into a DTC group, the independent DTC being not associated with other DTCs.

4. The method according to any of claims 1 to 3, further comprising:
determining whether a trouble corresponding to a first DTC in the first ranking result is cleared; and
if the trouble corresponding to the first DTC in the first ranking result is cleared, clearing the first DTC.

5. The method according to claim 4, wherein after the clearing the first DTC, the method further comprises:
determining whether there is a second DTC associated with the first DTC; and
if there is the second DTC associated with the first DTC, clearing the second DTC.

6. The method according to claim 5, further comprising:
after all of the DTCs in the first ranking result are cleared, detecting whether there is an unranked DTC;
if there is the unranked DTC, ranking the unranked DTC to obtain a second ranking result; and
sequentially clearing DTCs in the second ranking result.

7. An automobile trouble diagnosis apparatus (60), **characterized by** comprising:
a diagnostic trouble code, DTCs, obtaining module (601) configured to obtain at least two DTCs;
a first judging module (602) configured to determine whether there are associated DTCs in the at least two DTCs according to a mapping relationship in a preset association list;
a grouping module (603) configured to if there are associated DTCs in the at least two DTCs, group the at least two DTCs to obtain DTC groups according to a DTC association;
a first determining module (604) configured to rank the DTCs in each DTC group respectively, and determine DTCs from each DTC group that are ranked within a preset ranking as main DTCs;
a first ranking module (605) configured to rank the main DTCs according to a first priority of a system to which each of the at least two DTCs belongs and a second priority of each of the main DTCs in the system to obtain a first ranking result; and
a first ranking result outputting module (606) configured to output the first ranking result to an electronic device.

8. The apparatus (60) according to claim 7, wherein the first ranking module (605) is specifically configured to:
firstly rank, based on the first priority of the system to which each of the main DTCs belongs, the main DTCs according to systems to which the main DTCs belong; and
secondly rank the main DTCs in the systems according to the second priority of each of the main DTCs in the system to which the main DTC belongs to obtain the first ranking result.

9. The apparatus (60) according to claim 7, wherein the grouping module (603) is specifically configured to:
classify the associated DTCs in the at least two DTCs into a DTC group; and
classify each independent DTC of the at least two DTCs into a DTC group, the independent DTC being not associated with other DTCs.

10. The apparatus (60) according to any of claims 7 to 9, further comprising:
a second determining module (607) configured to determine whether a trouble corresponding to a first DTC in the first ranking result is cleared; and
a first DTC clearing module (608) configured to: when it is determined that the trouble corresponding to the first DTC in the first ranking result is cleared, clear the first DTC.

11. The apparatus (60) according to claim 10, further comprising:
a second judging module (609) configured to determine whether there is a second DTC associated with the first DTC; and
a second DTC clearing module (610) configured to: when there is a second DTC associated with the first DTC, clear the second DTC.

## Patentansprüche

1. Fahrzeugfehlerdiagnoseverfahren, **dadurch gekennzeichnet, dass** es umfasst:
Erhalten von mindestens zwei Diagnosefehlercodes, DTCs;
Bestimmen, ob es in den mindestens zwei DTCs assoziierte DTCs gibt, entsprechend einer Abbildungsbeziehung in einer voreingestellten Assoziationsliste;
wenn es in den mindestens zwei DTCs assoziierte DTCs gibt, Gruppieren der mindestens zwei DTCs, um DTC-Gruppen entsprechend einer DTC-Assoziation zu erhalten;
Einstufen der DTCs in jeder DTC-Gruppe, wobei die Einstufung Folgendes umfasst:
Bestimmen von DTCs aus jeder DTC-Gruppe, die innerhalb eines vorgegebenen Einstufungsbereichs liegen, als Haupt-DTCs;
Einstufen der Haupt-DTCs gemäß einer ersten Priorität eines Systems, zu dem jeder der mindestens zwei DTCs gehört, und einer zweiten Priorität jedes der Haupt-DTCs in dem System, um ein erstes Einstufungsergebnis zu erhalten; und
Ausgeben des ersten Einstufungsergebnisses an eine elektronische Vorrichtung.

2. Verfahren nach Anspruch 1, wobei die Einstufung der Haupt-DTCs nach einer ersten Priorität eines Systems, zu dem jeder der mindestens zwei DTCs gehört, und einer zweiten Priorität jedes der Haupt-DTCs in dem System, zu dem die mindestens zwei DTCs gehören, umfasst:
erstens Einstufen der Haupt-DTCs auf der Grundlage der ersten Priorität des Systems, zu dem jeder der Haupt-DTCs gehört, nach den Systemen, zu denen die Haupt-DTCs gehören; und
zweitens Einstufen der Haupt-DTCs in den Systemen entsprechend der zweiten Priorität jedes der Haupt-DTCs in dem System, zu dem der Haupt-DTC gehört, um das erste Einstufungsergebnis zu erhalten.

3. Verfahren nach Anspruch 1, wobei die Gruppierung der mindestens zwei DTCs gemäß einer DTC-Assoziation umfasst:
Klassifizieren der assoziierten DTCs in den mindestens zwei DTCs in eine DTC-Gruppe; und
Klassifizieren jedes unabhängigen DTC der mindestens zwei DTCs in eine DTC-Gruppe, wobei der unabhängige DTC nicht mit anderen DTCs assoziiert ist.

4. Verfahren nach einem der Ansprüche 1 bis 3, ferner umfassend:
Bestimmen, ob eine Störung, die einem ersten DTC im ersten Einstufungsergebnis entspricht, gelöscht ist; und
wenn die Störung, die dem ersten DTC im ersten Einstufungsergebnis entspricht, gelöscht wird, Löschen des ersten DTC.

5. Verfahren nach Anspruch 4, wobei das Verfahren nach dem Löschen des ersten DTC weiterhin umfasst:
Bestimmen, ob ein zweiter DTC mit dem ersten DTC assoziiert ist; und
wenn der zweite DTC mit dem ersten DTC assoziiert ist, Löschen des zweiten DTC.

6. Verfahren nach Anspruch 5, ferner umfassend:
nachdem alle DTCs im ersten Einstufungsergebnis gelöscht wurden, Erfassen, ob es einen nicht eingestuften DTC gibt;
wenn es den nicht eingestuften DTC gibt, Einstufen des nicht eingestuften DTC, um ein zweites Einstufungsergebnis zu erhalten; und
sequentielles Verrechnen von DTCs im zweiten Einstufungsergebnis.

7. Fahrzeugfehlerdiagnosevorrichtung (60), **dadurch gekennzeichnet, dass** sie umfasst:
ein Modul (601) zum Erhalten von Diagnosefehlercodes, DTCs, das konfiguriert ist, um mindestens zwei DTCs zu erfassen;
ein erstes Beurteilungsmodul (602), das konfiguriert ist, um zu bestimmen, ob es assoziierte DTCs in den mindestens zwei DTCs gibt, gemäß einer Abbildungsbeziehung in einer voreingestellten Assoziationsliste;
ein Gruppierungsmodul (603), das konfiguriert ist, um, wenn in den mindestens zwei DTCs assoziierte DTCs vorhanden sind, die mindestens zwei DTCs zu gruppieren, um DTC-Gruppen gemäß einer DTC-Assoziation zu erhalten;
ein erstes Bestimmungsmodul (604), das konfiguriert ist, um die DTCs in jeder DTC-Gruppe jeweils einzustufen und DTCs aus jeder DTC-Gruppe, die innerhalb einer voreingestellten Einstufung eingestuft werden, als Haupt-DTCs zu bestimmen;
ein erstes Einstufungsmodul (605), das konfiguriert ist, um die Haupt-DTCs gemäß einer ersten Priorität eines Systems, zu dem jeder der mindestens zwei DTCs gehört, und einer zweiten Priorität jedes der Haupt-DTCs in dem System einzustufen, um ein erstes Einstufungsergebnis zu erhalten; und
ein Modul (606) zur Ausgabe eines ersten Einstufungsergebnisses, das konfiguriert ist zur Ausgabe des ersten Einstufungsergebnisses an eine elektronische Vorrichtung.

8. Vorrichtung (60) nach Anspruch 7, wobei das erste Einstufungsmodul (605) speziell konfiguriert ist, um:
erstens auf der Grundlage der ersten Priorität des Systems, zu dem jeder der Haupt-DTCs gehört, die Haupt-DTCs nach Systemen einzustufen, zu denen die Haupt-DTCs gehören; und
zweitens die Haupt-DTCs in den Systemen nach der zweiten Priorität jedes der Haupt-DTCs in dem System, zu dem der Haupt-DTC gehört, einzustufen, um das erste Einstufungsergebnis zu erhalten.

9. Vorrichtung (60) nach Anspruch 7, wobei das Gruppierungsmodul (603) speziell konfiguriert ist, um:
die zugehörigen DTCs in den mindestens zwei DTCs in eine DTC-Gruppe einzuordnen; und
jeden unabhängigen DTC der mindestens zwei DTCs in eine DTC-Gruppe einzuordnen, wobei der unabhängige DTC nicht mit anderen DTCs assoziiert ist.

10. Vorrichtung (60) nach einem der Ansprüche 7 bis 9, ferner umfassend:
ein zweites Bestimmungsmodul (607), das konfiguriert ist, um zu bestimmen, ob eine Störung, die einem ersten DTC in dem ersten Einstufungsergebnis entspricht, gelöscht ist; und
ein erstes DTC-Löschmodul (608), das konfiguriert ist, um: wenn festgestellt wird, dass die Störung, die dem ersten DTC in dem ersten Einstufungsergebnis entspricht, gelöscht ist, den ersten DTC zu löschen.

11. Vorrichtung (60) nach Anspruch 10, ferner umfassend:
ein zweites Beurteilungsmodul (609), das konfiguriert ist, um zu bestimmen, ob es einen zweiten DTC gibt, der mit dem ersten DTC assoziiert ist; und
ein zweites DTC-Löschmodul (610), das konfiguriert ist, um: wenn es einen zweiten DTC gibt, der mit dem ersten DTC assoziiert ist, den zweiten DTC zu löschen.

## Revendications

1. Procédé de diagnostic de panne de véhicule, **caractérisé en ce qu'**il comprend :
obtenir au moins deux codes de diagnostic de panne, DTC ;
déterminer s'il existe des CPT associés dans les au moins deux CPT en fonction d'une relation de mappage dans une liste d'associations prédéfinie ;
s'il existe des CPT associés dans les au moins deux CPT, grouper les au moins deux CPT pour obtenir des groupes de CPT en fonction d'une association de CPT ;
classer les CPT dans chaque groupe de CPT respectivement ; le classement comprenant :
déterminer les CPT de chaque groupe de CPT qui sont classés dans une fourchette de classement prédéfinie en tant que CPT principaux ;
classer les CPT principaux en fonction d'une première priorité d'un système auquel appartient chacun des au moins deux CPT et d'une deuxième priorité de chacun des CPT principaux dans le système afin d'obtenir un premier résultat de classement ; et
émettre le premier résultat de classement à un dispositif électronique.

2. Procédé selon la revendication 1, dans lequel le classement des CPT principaux en fonction d'une première priorité d'un système auquel appartient chacun des au moins deux CPT et d'une deuxième priorité de chacun des CPT principaux dans le système auquel appartiennent les au moins deux CPT comprend :
classer dans un premier temps, sur la base de la première priorité du système auquel appartient chacun des CPT principaux, les CPT principaux en fonction des systèmes auxquels appartiennent les CPT principaux ; et
classer dans un deuxième temps les CPT principaux des systèmes en fonction de la deuxième priorité de chacun des CPT principaux du système auquel appartient le CPT principal, afin d'obtenir le premier résultat du classement.

3. Procédé selon la revendication 1, dans lequel le groupement des au moins deux DTC selon une association de DTC comprend :
classer les CPT associés dans les au moins deux CPT dans un groupe de CPT ; et
classer chaque CPT indépendant des au moins deux CPT dans un groupe de CPT, le CPT indépendant n'étant pas associé à d'autres CPT.

4. Procédé selon l'une quelconque des revendications 1 à 3, comprenant en outre :
déterminer si un problème correspondant à un premier DTC dans le premier résultat de classement est résolu ; et
si le problème correspondant au premier DTC dans le premier résultat du classement est résolu, supprimer le premier DTC.

5. Procédé selon la revendication 4, dans lequel, après la suppression du premier DTC, le procédé comprend en outre :
déterminer s'il existe un deuxième DTC associé au premier DTC ; et
s'il existe un deuxième DTC associé au premier DTC, supprimer le deuxième DTC.

6. Procédé selon la revendication 5, comprenant en outre :
après que tous les CPT du premier résultat de classement ont été supprimés, détecter s'il existe un CPT non classé ;
s'il y a un CPT non classé, classer le CPT non classé pour obtenir un deuxième résultat de classement ; et
supprimer séquentiellement les DTC dans le deuxième résultat de classement.

7. Dispositif de diagnostic de panne de véhicule (60), **caractérisé en ce qu'**il comprend :
un module d'obtention de codes de panne de diagnostic, DTC, (601) configuré pour obtenir au moins deux DTC ;
un premier module de jugement (602) configuré pour déterminer s'il existe des DTC associés dans les au moins deux DTC en fonction d'une relation de mappage dans une liste d'association prédéfinie ;
un module de groupement (603) configuré pour, s'il existe des CPT associées dans les au moins deux CPT, grouper les au moins deux CPT afin d'obtenir des groupes de CPT en fonction d'une association de CPT ;
un premier module de détermination (604) configuré pour classer les CPT dans chaque groupe de CPT respectivement, et déterminer les CPT de chaque groupe de CPT qui sont classés dans un classement prédéfini comme CPT principaux ;
un premier module de classement (605) configuré pour classer les CPT principaux en fonction d'une première priorité d'un système auquel appartient chacun des au moins deux CPT et d'une deuxième priorité de chacun des CPT principaux dans le système afin d'obtenir un premier résultat de classement ; et
un module de sortie du premier résultat de classement (606) configuré pour émettre le premier résultat de classement à un dispositif électronique.

8. Dispositif (60) selon la revendication 7, dans lequel le premier module de classement (605) est spécifiquement configuré pour :
classer dans un premier temps, sur la base de la première priorité du système auquel appartient chacun des CPT principaux, les CPT principaux en fonction des systèmes auxquels ils appartiennent ; et
classer dans un deuxième temps les CPT principaux des systèmes en fonction de la deuxième priorité de chacun des CPT principaux du système auquel appartient le CPT principal, afin d'obtenir le premier résultat du classement.

9. Dispositif (60) selon la revendication 7, dans lequel le module de groupement (603) est spécifiquement configuré pour :
classer les CPT associés dans les au moins deux CPT dans un groupe de CPT ; et
classer chaque CPT indépendant des au moins deux CPT dans un groupe de CPT, le CPT indépendant n'étant pas associé à d'autres CPT.

10. Dispositif (60) selon l'une quelconque des revendications 7 à 9, comprenant en outre :
un deuxième module de détermination (607) configuré pour déterminer si un problème correspondant à un premier DTC dans le premier résultat de classement est résolu ; et
un premier module de suppression de DTC (608) configuré pour : lorsqu'il est déterminé que le problème correspondant au premier DTC dans le premier résultat de classement est résolu, supprimer le premier DTC.

11. Dispositif (60) selon la revendication 10, comprenant en outre :
un deuxième module de jugement (609) configuré pour déterminer s'il existe un deuxième DTC associé au premier DTC ; et
un deuxième module de suppression de DTC (610) configuré pour : lorsqu'il existe un deuxième DTC associé au premier DTC, supprimer le deuxième DTC.
